Europäisches Patentamt

European Patent Office

Office européen des brevets

(11) Publication number: **0 259 949**
**A2**

# EUROPEAN PATENT APPLICATION

(21) Application number: 87305747.5

(22) Date of filing: 29.06.87

(51) Int. Cl.⁴ **A01N 1/02** , A61K 35/16

(30) Priority: **12.09.86 US 907113**

(43) Date of publication of application:
**16.03.88 Bulletin 88/11**

(84) Designated Contracting States:
**BE CH DE ES FR GB IT LI NL SE**

(71) Applicant: TECHNICON INSTRUMENTS
CORPORATION
511 Benedict Avenue
Tarrytown, New York 10591(US)

(72) Inventor: Buhl, Steven Norbert
323 Millwood Road
Chappaqua New York 10514(US)

(74) Representative: Wain, Christopher Paul et al
A.A. THORNTON & CO. Northumberland
House 303-306 High Holborn
London WC1V 7LE(GB)

(54) Method of improving optical clarity in reconstituted lyophilized products.

(57) A method of producing a lyophilized product from a lipid-containing fluid sample, comprises lyophilizing under lyophilizing conditions a lipid-containing fluid sample which contains from 1% to about 15% methanol, to yield the lyophilized product. The presence of the methanol provides a product which, upon reconstitution, has improved optical clarity.

EP 0 259 949 A2

## 0 259 949

# METHOD OF IMPROVING OPTICAL CLARITY IN RECONSTITUTED LYOPHILIZED PRODUCTS

The present invention relates to the field of clinical chemistry. More specifically, the invention relates to a process by which the clarity of a reconstituted lyophilized product may be improved.

The field of clinical testing has been growing at a tremendous rate over the past 40 years, with the number of clinical tests performed in the United States alone virtually doubling every five years. Currently, the number of clinical rests performed in U.S. laboratories is probably in the billions per year. This has resulted, in large part, from physicians more frequent use of biochemical tests of body fluids as a supplement or substitute for more traditional diagnostic methods. For example, biochemical analysis of human serum for the presence of cardiac enzymes, liver enzymes and bilirubin, pancreatic enzymes, glucose, albumin and calcium are frequently utilized as indicators of myocardial infarction, liver dysfunction, pancreatic dysfunction, renal breakdown and parathyroid dysfunction, respectively. With the recognition that biochemical assays often are capable of providing more accurate diagnoses of certain ailments, the constant demand for even more reliable and expenditious clinical testing has also prompted considerable investigation into new and improved methods in biomedical assay.

Although improved automation, and thus instrumentation, is an important aspect of the growth in this area on a more fundamental level, there is also a continued need for improved medical diagnostic reagents to aid in testing. Chemical reagent systems are very popular because of the convenience of use and great potential for uniformity of the product produced under rigorous control standards. In order for a reagent system to be put to a practical use, however, it is necessary that certain standards be routinely met. Obviously, specificity, precision and accuracy are of utmost important if the test system is to be relied upon.

A large number of analytical tests rely on the techniques of colorimetry or spectrophotometry to detect the presence of an analyte in a sample. The instrumentation used in these types of assays is often strongly affected by the presence of interfering substances in a sample to be read; this, in turn, of course affects the specificity and accuracy of the result. Turbidity resulting from lipid in a sample is one type of problem which plagues serum analysis. This difficulty is particularly noticeable in lipid-containing samples which are first freeze-dried (lyophilized) and then reconstituted prior to their use in a clinical assay. Lyophilization of serum samples is frequently performed in order to prepare standards or controls for use in kits for biomedical testing, which kits may be necessarily stored for relatively prolonged periods of time between their manufacture and use. Although the lyophilization is critical to extending the life of the sample, the product which results from rehydration typically contains an unacceptable amount of turbidity. The use of such a sample in a colorimetric or spectrophotometric assay, presents the obvious potential for inaccurate or skewed results, or presents the necessity for additional testing to compensate for the background turbidity.

There thus exists a need for a method of producing a lyophilized lipid-containing product which, upon rehydration, retains substantially the same optical clarity as the source material. It has now been discovered that the addition of relatively small amounts of methanol to the fluid sample prior to lyophilization will ultimately yield a lyophilized product which, upon rehydration, will lack the turbidity seen in products dried without methanol present.

The present invention thus provides a method of producting a lyophilized product from a lipid-containing fluid sample, which comprises lyophilizing a mixture of the lipid-containing fluid sample and from about 1% to about 15% methanol.

The invention also provides the lyophilized product so produced, said product upon reconstitution having substantially the same optical clarity as the starting fluid sample.

Although it is not unknown to added methanol to certain types of samples to be freeze-dried, it has not previously been known to use methanol to improve optical clarity in reconstituted lipid-containing samples. For example, Seager, et al. (Manuf. Chem. & Aerosol News, Nov. 1978, p. 43; Dec. 1978, p. 59; Jan. 1979, p. 46; Feb. 1979, p. 41) performed a series of tests to determine if the speed of lyophilization could be improved by the addition of various organic solvents. The material being dried was a drug-containing solution, and it was found that addition of methanol to the sample produced a very slow drying product and, therefore, use of methanol was not particularly recommended.

In the present method, however, it has been surprisingly discovered that not only does the addition of methanol to a lipid-containing sample, in specified amounts, ultimately yield a reconstituted product of excellent optical clarity, but also it facilitates the drying of the sample. The latter observation is particularly unexpected since lipid-containing fluids are typically not often lyophilized due to their characteristic resistance to drying.

The amount of methanol necessary to achieve the desired effect is relatively small. A range of about 1% to about 15% by volume will usually be sufficient, with the most preferred range being from about 3% to about 10% methanol. Although percentages higher than 10% may be used, the results are not significantly improved by increasing the amounts of methanol and interference with the drying process may occur at higher concentration. The methanol is simply added and blended with the lipid-containing sample in an amount sufficient to provide the appropriate concentration.

The use of this technique is particularly successful with serum or formulated serum samples, either animal or human. By "serum" is meant, in the present context, the clear fluid which remains after blood has been clotted completely. However, the technique is not restricted to serum but may also be applied to virtually any lipid-containing fluid which it would be desirable to freeze-dry. The term "lipid" as used in the present specification and claims refers to any of a number of organic substances characterized by their relative insolubility in water and their extractability by non-polar solvents such as chloroform or benzene, and also is intended to encompass hydrophobic groups and other lipid-like substances which may cause cloudiness or turbidity as well, including lipid-containing fluids in combination with other materials such as a lipid-protein fluid mixture. Among the more common lipid or lipid-type substances found in the human body are phosphatidylcholine, triglycerides, sphingomyelin, fatty acids, bilirubin, and cholesterol. Among the other possible applications are a number of other biological fluids which may be the subject of chemical analysis and which may also contain lipid; among these are, for example, cerebrospinal fluid, bile, plasma, and peritoneal fluid. Other commercial applications include use for lyophilized reagents which may contain lipid or hydrophobic groups which are lipid-like, usch as bilirubin, triglycerides, and cholesterol.

After mixing of the methanol with the serum, or other material of interest, the fluid is then dispensed into vials or trays for lyophilization. The techniques and instruments of lyophilization are well known to those skilled in the art and do not, per se, constitute a part of the invention. The conditions employed will vary depending upon the fluid material to be dried. For serum, for example, the conditions for lyophilization will include freezing to less than about -30°C, evacuating the chamber, heating the sample up to about -5°C until less than 10% moisture is present, and then heating to 25°C until the amount of moisture is less than about 2%. The skilled artisan will readily recognize the means by which the conditions are varied in accordance with the nature of the substrate. Following lyophilization, the products may be stored and reconstituted as necessary in accordance with their intended purpose. Turbidity is typically measured, in terms of absorption, in the 700 nm range. When the reconstituted product is compared in this manner with the starting material, it will be found that the rehydrated product will shown absorption characteristics and optical clarity which are substantially identical to the original fluid samples.

The following examples illustrate the effect of the addition of methanol to various lipid-containing fluid samples prior to freeze-drying.

## EXAMPLE 1

To 1 liter of human serum (Biocel Labs, Carson, CA) was added alanine aminotransferase 100 $\mu$/l, creatinine 5 mg/dl, cholesterol 200 mg/dl (from bovine serum, Miles Labs, Elkhardt, Indiana), creatine kinase 100 $\mu$/l, glucose 200 mg/dl, potassium chloride 5 meg/l, sodium phosphate 8 mg/dl, sodium chloride 115 meg/l, triglycerides 200 mg/dl (from egg yolk), urea 50 mg/dl, uric acid 100 mg/dl and 50 ml of methanol (Fisher Scientific, Pittsburge, PA). The constituent concentrations can be measured on an RA-1000 analytical system (Technicon Instruments Corp., Tarrytown, NY). The serum is filtered through 1.2 $\mu$, 0.45 $\mu$, and 0.2 $\mu$ media (Pall Filter Corp., Glen Cove, NY), dispensed 5.5 ml per bottle (Wheaton Scientific, Millville, NJ). The bottles of serum were frozen to -40°C in a freezer dryer (Hull Freeze Dryers, Hull, PA) and dried until the moistures were less than 2%. After drying, the vials were sealed and stored at 2°C to 25°C until needed. Each vial was reconstituted with 5.0 ml of deionized water. The absorbance at 710 nm before freeze-drying was 0.12A, and after reconstitution, the absorbance at 710 nm was 0.08A.

## EXAMPLE 2

To 1 liter of 60 g bovine serum albumin (Armour Pharmaceutical, Tarrytown, NY) was added creatine kinase 500 $\mu$/l, cholesterol 400 mg/dl (from bovine serum, Miles Labs, Elkhardt, Ind.), ferric ammonium citrate 600 mg/dl, triglycerides 400 mg/dl (from egg yolk), glucose 250 mg/dl and 50 ml of methanol (Fisher Scientific, Pittsburgh, PA). The constituent concentrations can be measured on an RA-1000 analytical system (Technicon Instruments Corp., Tarrytown, NY). The serum was filtered through 1.2 $\mu$ and 0.45 $\mu$

3

media (Pall Trincor Corp., South Plainfield, NJ). The serum was dispensed 10.6 ml per bottle (Wheaton Scientific, Millville, NJ), frozen to -40°C and freeze dried (Hull Freeze Dryers, Hull, PA). After drying, the bottles were sealed and stored at 2-25°C until needed. Each bottle was reconstituted with 10.0 ml of diluents (15 mmol Tris carbonate per liter). The absorbance at 710 nm prelyophilization was 0.15A, and the absorbance at 710 nm after reconstitution was 0.14A.

EXAMPLE 3

To 1 liter of bovine serum (Irvine Scientific Co., Irvine, CA) were added the following constituents:

Alanine amino transferase     180 μ/l
Aspartate amino transferase     180 μ/l
Creatinine     5 mg/dl
Creatine kinase     600 μ/l
Cholesterol (bovine serum) ·     180 mg/dl
Glucose     250 mg/dl
Bilirubin     5 mg/dl
Gamma glutamyl transferase     200 μ/l
Calcium chloride     10 mg/dl
Sodium phosphate     5 mg/dl
Sodium chloride     100 meg/l
Triglycerides (egg yolk)     180 mg/dl
Urea     50 mg/dl
Uric acid     7 mg/dl

The constituents were analyzed on an RA-1000 system (Technicon Instruments Corp., Tarrytown, NY).

The serum was then filtered through 1.2 μ and 0.45 μ media and divided into 3 portions. The following amounts of methanol were added:

Portion A     0
Portion B     30 ml per liter
Portion C     100 ml per liter

Each serum was then dispensed 10.5 ml per bottle (Wheaton Scientific, Millville, NJ) and freeze dried (Hull Freeze Dryers, Hull, PA). After drying, each bottle was sealed and stored at 2-25°C until needed.

The contents of each bottle were reconstituted with 10.0 ml of deionized water. The absorbances at 710 nm for the samples were:

| Sample | Before Freeze Drying | After Freeze Drying |
|--------|----------------------|---------------------|
| A | 0.08 | 0.82 |
| B | 0.11 | 0.09 |
| C | 0.12 | 0.09 |

**Claims**

1. A method of making a lyophilized product from a lipid-containing fluid sample, which comprises lyophilizing the lipid-containing fluid sample, characterised in that the sample contains from 1% to about 15% (by volume) methanol.

2. A method of improving the optical clarity, following reconstitution, of a lyophilized product prepared from a lipid-containing fluid sample which comprises lyophilizing the fluid sample, which has been adjusted to have a concentration of about 1 to about 15% methanol, under lyophilizing conditions.

3. A method according to claim 1 or 2, wherein the concentration of methanol is about 3 to about 10%.

4. A method according to claim 3, wherein the methanol concentration is about 5%.

5. A method according to claim 1,2,3 or 4, wherein the fluid is a biological fluid, or a mixture of biological fluids.

6. A method according to claim 1,2,3 or 4, wherein the fluid is a mixture of protein-and lipid-containing material.

7. A method according to claim 5, wherein the fluid is serum.

8. A method according to claim 7, wherein the fluid is human serum.

9. A lyophilized product derived from a lipid-containing fluid sample by the method of any of claims 1 to 8.

10. A lipid-containing fluid sample made by reconstituting a lyophilized product as claimed in claim 9.